(19) **Europäisches Patentamt / European Patent Office / Office européen des brevets**

(11) **EP 2 120 034 A1**

(12) **EUROPEAN PATENT APPLICATION**

(43) Date of publication:
**18.11.2009 Bulletin 2009/47**

(51) Int Cl.:
**G01N 3/30** *(2006.01)*   **G01N 29/04** *(2006.01)*
**G01N 29/12** *(2006.01)*   *G01N 3/02 (2006.01)*

(21) Application number: **08156386.8**

(22) Date of filing: **16.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **VRIJE UNIVERSITEIT BRUSSEL 1050 Brussel (BE)**

(72) Inventor: **Sol, Hugo 1050 Elsene (BE)**

(74) Representative: **Brants, Johan P.E. et al De Clercq Brants & Partners Edgard Gevaertdreef 10a 9830 Sint-Martens-Latem (BE)**

(54) **Method and apparatus for providing an optimal test panel for the non-destructive measurement of elastic properties of structural materials**

(57)   The present invention relates to a method and apparatus for the non-destructive identification of elastic engineering constants of structural materials. The data is obtained from the measurements of the natural frequencies of test beams made from the structural material. From these data a MIC-panel can be made and a measurement of the natural frequencies of this MIC-panel identifies the elastic engineering constants the structural material.

Figure 3A

Printed by Jouve, 75001 PARIS (FR)

**Description**

**Subject of the invention**

The present invention relates to a method for the non-destructive identification of elastic properties of structural materials. More specifically, the invention relates to a method for rapidly obtaining an optimal aspect ratio of a test panel with the purpose of using this panel in a method for the rapid identification of the elastic engineering constants of structural materials from panel vibration tests.

**Prior art and technological background**

Structural materials may generally be classified as isotropic and anisotropic materials. Isotropic materials are more traditional materials such as but not limited to steel, aluminium, polymers or glass. Isotropic materials show, in contrary to anisotropic materials, the same elastic properties in all directions. Anisotropic materials show different elastic properties in different directions. Some anisotropic materials can be considered as orthotropic materials such as but not limited to wood, fibre reinforced polymers, ceramics or metals. Orthotropic materials have three mutually perpendicular planes of material property symmetry. Whether the material is isotropic or anisotropic, it is important that methods are developed for reliably establishing the elastic properties of these structural materials. Such data are necessary for design, virtual prototyping, quality control, and in-service evaluation of products and constructions. Due to their different properties in different directions the determination of elastic properties of anisotropic materials is more difficult than for isotropic materials.

The elastic behaviour of isotropic materials may be characterized by two elastic engineering constants:

the Young's modulus of elasticity, $E$; and the shear modulus, $G$. $E$ and $G$ are referred to as the elastic engineering constants of an isotropic material.

The elastic behaviour of orthotropic panels may be adequately described by four elastic engineering constants defined in the XY-plane of the panel: the Young's modulus of Elasticity in the first material symmetry direction, $E_x$; the Young's modulus in the second, perpendicular to the first, symmetry direction, $E_y$; the in-plane shear modulus, $G_{xy}$; and the coupling coefficient also referred to as the Poisson's ratio, $\nu_{xy}$. The values of $E_x$, $E_y$, $G_{xy}$ and $\nu_{xy}$ are referred to as the in plane elastic engineering constants of an orthotropic material.

Presently, a large number of standards stipulate methods for measurement of the elastic engineering constants of structural materials. Most of these methods are based on static tests. They share the major drawback of involving many samples and require special test fixtures. These methods are consequently slow and expensive.

Other methods that derive elastic engineering constants of a structural material are based on vibration response data. A number of journal articles describe the state of the art of a method to identify elastic engineering constants from vibration response data measured on test panels of structural materials. The method typically consists out of providing an impulse on a suspended test panel and detecting the vibration response of the test panel. The response is transformed into the frequency domain and a series of natural frequencies are derived and coupled to the associated mode shapes. From these data the elastic engineering constants are predicted using computing means. The method described in the prior art estimates these elastic engineering constants in an iterative way, starting from estimated initial values and using an inverse method. The principle of an inverse method is to compare natural frequencies computed with a numerical model of the test panel with the measured natural frequencies. The engineering elastic engineering constants in the numerical model are iteratively updated until the computed natural frequencies match the measured natural frequencies.

Problematic in all the procedures described in the literature and issued patents is that they suffer from the disadvantage that each test panel has an arbitrary chosen aspect ratio and therefore the sequence of mode shapes associated to each of the natural frequencies in the selected set of measured frequencies is not a priori known to the experimentalist. The coupling of the experimentally measured natural frequencies to the computed natural frequencies is consequently performed by trial and error or it requires the determination of the mode shape indices using expensive modal analysis techniques. Both solutions are time consuming and require the measurement of the impact force signal in addition of the response of the test panel.

Furthermore, the state of the art methods suffer from the problem that the number of measured natural frequencies is selected by trial and error by the experimentalist. To assure that the desired elastic engineering constants become observable, a large number of natural frequencies are selected. However, the error on the computed value of higher natural frequencies is bigger than the ones for lower natural frequencies due to increased numerical problems. Selecting a large set of natural frequencies is therefore more prone to errors and more time consuming as selecting a small set.

Another difficulty of the state of the art methods is that good initial values for the unknown elastic engineering constants should be provided in a systematic and efficient way. The choice of these initial values is however not evident and small alterations can lead to different results. Furthermore, the arbitrary chosen aspect ratio of the test plate does not guarantee that the measured frequencies contain enough information to allow the identification of all the elastic engineering constants and thus these constants may not be observable.

Recently some improvements have been suggested in the scientific literature where it was shown that some of the above mentioned disadvantages can be overcome if an optimal test panel could be made that produces a torsion, an anticlastic and a synclastic mode shape as the first three mode shapes associated to the first three natural frequencies of the optimal test panel. In the present application such an optimal test panel is referred to as a "Maximum Information Contents" panel or abbreviated a MIC-panel. The realisation of such a MIC-panel however requires the knowledge of the Young's moduli, and these values are basically unknown. Therefore a MIC-panel can only be realized in an approximate way resulting in a high uncertainty of the obtained values of the elastic engineering constants.

This large list of disadvantages explains why a method, which was considered as very promising twenty years ago, is not yet applied today by experimentalists in industry or research laboratories. There is a need for a method for a correct determination of the elastic engineering constants of a structural material. The method should further be easy for an experimentalist and a highly exact result should be obtained in a relative short period.

It is the intention of the present invention to provide a method for the fast and exact determination of the elastic engineering constants of a structural material. The method of the present invention provides a method for determining the optimal aspect ratio of a test panel from a structural material wherein the aspect ratio of that MIC-panel is determined using a specific formula. By providing a test panel with an optimal aspect ratio, the present invention further provides a method for the determination of the elastic engineering constants of a structural material in a fast, exact, economical and user-friendly manner.

**Summary of the invention**

The present invention relates to a method for the identification of elastic engineering constants of a test panel from a structural material, without the necessity of knowing the mode shape indices, without the necessity of measuring the impact force signal and without the necessity of knowing initial estimates for the elastic engineering constants. The present invention minimizes the uncertainty on the obtained values for the elastic engineering constants since the accuracy of the obtained results is only dependant on the accuracy of the measured natural frequencies. Furthermore, the present invention only requires the measurement of a small set of 3 natural frequencies of the test panel. The present invention also guarantees that the elastic engineering constants are observable.

In carrying out the above objective and other objectives and features of the invention, a method is disclosed for determining the optimal aspect ratio of a test panel. The invention relates to a method for determining the optimal aspect ratio of a test panel from a structural material, wherein the optimal aspect ratio of the test panel is determined using the formula:

$$Aspect\,ratio\,of\,optimal\,test\,panel = \frac{a_x}{a_y} = \frac{L_x}{L_y}\sqrt{\frac{f_x}{f_y}}$$

where $a_x$ and $a_y$ are the dimensions of the MIC-panel along the two symmetry axes X and Y, $L_x$ and $L_y$ are the longitudinal lengths of test beams cut from a test panel along both symmetry axes X and Y, and $f_x$ and $f_y$ are respectively the fundamental natural frequencies of said test beams.

In another embodiment of the present invention, an inverse method is disclosed for determining the elastic properties of a structural material, wherein the first three natural frequencies of a MIC-panel, having an aspect ratio determined according to a method of the invention, are measured.

The structural material of the test panel of the present invention can be an isotropic or an anisotropic material, preferably an anisotropic material and for instance an orthotropic material.

The present invention uses a test panel for determining the elastic engineering constants of a structural material according to a method of the invention. From this test panel a first test beam can be cut along the X symmetry axis and a second test beam can be cut along the Y symmetry axis.

The present invention further provides a MIC-panel for measuring the elastic properties of the structural material, wherein the aspect ratio of the MIC-panel is determined according to the method of the invention.

The present invention also discloses a computer program product which can be loaded into a programmable apparatus; the computer program product contains sequences of instructions or portions of software code for receiving and analysing data from a vibration sensor and implementing the steps of the method according to the invention.

In yet another embodiment the present invention discloses an apparatus for the non-destructive determination of the elastic properties of a structural material. The apparatus comprises a suspension frame from which a fine suspending medium extends; the fine suspending medium is suitable for carrying a test panel or test beam of the material. An impulse means is provided for imparting the suspended test panel or test beam and a vibration sensor, suitable to be connected to the suspended test panel or test beam, enables the detection of the response of the test panel or test beam as a result from the reaction with the impulse means. The apparatus further comprises a signal conditioning unit capable of amplifying the signal provided by the vibration sensor and removing the measurement noise and a computer means adopted to implement the steps of the method of the present invention.

## Brief description of the figures

Fig. 1 is a front view of a test panel from which two test beams are cut along the symmetry axes X and Y.

Fig. 2 is a perspective view of an apparatus used to determine the elastic engineering constants of structural materials with a view of the way a test beam is suspended.

Fig. 3 is a perspective view of an apparatus used to determine the elastic engineering constants of structural materials with views of the ways the MIC-panel is suspended.

## Detailed description of the invention

The present invention relates in one aspect to a method for the identification of elastic engineering constants of a test panel from a structural material, without the necessity of knowing the mode shape indices, without the necessity of measuring the impact force signal and without the necessity of knowing initial estimates for the elastic engineering constants. The present invention minimizes the uncertainty on the obtained values for the elastic engineering constants since the accuracy of the obtained results is only dependant from the accuracy of the measured natural frequencies. Furthermore, the present invention only requires a small set of 3 natural frequencies of the test panel. The present invention also guarantees that the elastic engineering constants are observable.

The present invention primarily addresses the derivation of elastic properties from vibration frequencies. Every structure, whether or not anisotropic, has its natural frequencies of vibration in response to a given stimulus. While vibrating at any of these frequencies, the structure assumes a profile, known as a mode shape, which is peculiar to that specific frequency.

Unless defined otherwise, all technical and scientific terms used herein have the same meaning as is commonly understood by one of skill in the art. The articles "a" and "an" are used herein to refer to one or to more than one, i.e. to at least one of the grammatical object of the article. By way of example, "a sample" means one sample or more than one sample.

In the present invention the term "test panel" refers to a panel taken from a structural material. The aspect ratio of the test panel is chosen randomly and therefore the type and sequence of the first mode shapes is not a priori known. The shape of the test panels taken from the structural material can encompass any kind of shape, and preferably the test panel has a rectangular shape.

In the present invention the term "mode shape" refers to the mode of vibration of a rectangular test panel made of structural material A test panel can typically have an infinite number of vibration modes, such as, but not limited to, flexional modes, a torsional mode, a synclastic mode or an anticlastic mode.

In the present invention the term "mode shape indices" refer to the number of vibrations nodes of a mode shape on the boundaries of a test panel. Indices (N,M) of a mode shape of a rectangular test panel mean the mode shape has N nodes on a longitudinal boundary and M nodes on a transverse boundary. By way of example, a torsional mode shape has indices (1,1), an anticlastic mode shape (2,2) and a synclastic mode shape (0,0).

In the present invention the term "natural frequencies" refers to the frequencies at which a structural material tends to oscillate. At these frequencies, even small periodic driving forces can produce large amplitude vibrations.

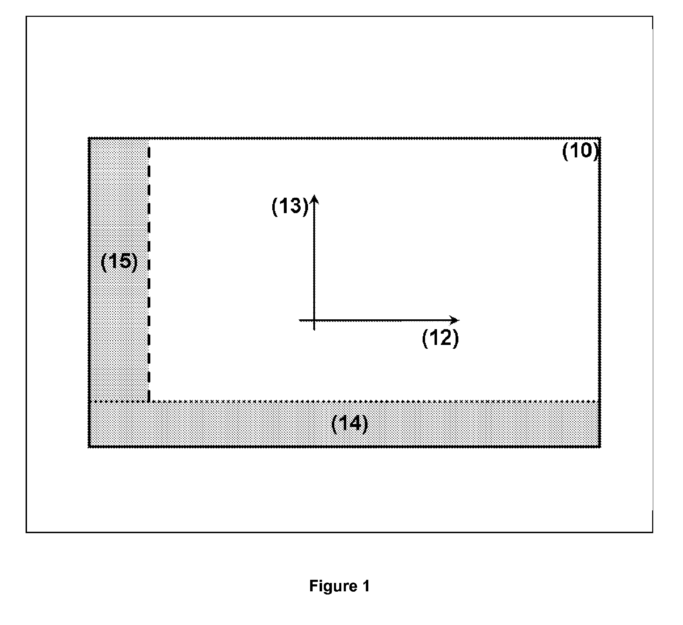

In the present invention the term "orthotropic material" refers to a material having three mutually perpendicular planes of material property symmetry. In orthotropic materials, the coordinate axes used to describe the material properties are selected so as to coincide with the axes of material symmetry. As an example figure 1 shows a test panel (10) from a structural material having two symmetry axes, the horizontal X-axis (12) and the vertical Y-axis (13). In the XY-plane of the test panel, wherein the two symmetry axes lay, x and y are the orthogonal plane coordinates.

In the present invention the term "elastic engineering constants" refers to the constants that characterize the elastic behaviour of structural materials. Elastic engineering constants of isotropic material are the Young's modulus of elasticity, *E*, describing tensile elasticity or the tendency of an object to deform along an axis when opposing forces are applied along that axis; and the shear modulus, *G*, describes an object's tendency to shear when acted upon by opposing forces. *E* and *G* are referred as the elastic engineering constants of isotropic material. The elastic behaviour of orthotropic materials may be adequately described by four elastic engineering constants defined in the XY-plane of the panel: the Young's modulus of Elasticity in the first material symmetry direction, $E_x$; the Young's modulus in the second, perpendicular to the first, symmetry direction, $E_y$; the in-plane shear modulus, $G_{xy}$; and the coupling coefficient also referred to as the Poisson's ratio, $\nu_{xy}$. The values of $E_x$, $E_y$, $G_{xy}$ and $\nu_{xy}$ are referred to as the in plane elastic engineering constants of an orthotropic material.

In the present invention the term "aspect ratio" of a test panel or a test beam refers to the ratio of its longer dimension to its shorter dimension. When the test panel has for instance a rectangular shape, the aspect ratio is defined by the length of the shape divided by its width.

In the present invention the term "Maximum Information Contents" panel, "MIC-panel" or "optimal test panel" all refer to a test panel having an aspect ratio adjusted in such a way that the type and sequence of the first three mode shapes are fixed. First a torsion, secondly an anticlastic and third a synclastic mode shape can be observed for these specific optimal test panels.

The invention relates to a method for determining the optimal aspect ratio of a test panel from a structural material, preferably a rectangular test panel from a structural material, wherein the optimal aspect ratio of the test panel is determined using the formula:

$$Aspect\ ratio\ of\ MIC-panel = \frac{a_x}{a_y} = \frac{L_x}{L_y}\sqrt{\frac{f_x}{f_y}}$$

where $a_x$ and $a_y$ are the dimensions of the MIC-panel along the two symmetry axes X and Y, $L_x$ and $L_y$ are the longitudinal lengths of test beams cut from a test panel along both symmetry axes X and Y, and $f_x$ and $f_y$ are respectively the fundamental natural frequencies of said test beams.

The formula determining the aspect ratio of the MIC-panel requires only frequency and length values that can be directly measured from the test beams. The formula therefore provides a simple and deterministic way to make an optimal test panel. A MIC-panel assures that the type and sequence of the first three mode shapes is fixed: first a torsion, secondly an anticlastic and third a synclastic mode shape. Since the first three mode shapes are fixed in a MIC-panel, a determination of the mode shape indices of a test panel is avoided and therefore additional measurements such as impact force measurements become unnecessary. This is an important feature since a reduction of the required measurements is economically beneficial, it reduces the time of the measurement procedure and specialised equipment for measuring the impact force is not required.

In the formula determining the aspect ratio of the MIC-panel $a_x$ and $a_y$ are the dimensions of the MIC-panel along the two symmetry axes X and Y, $L_x$ and $L_y$ are the longitudinal lengths of the test beams cut from a test panel along both symmetry axes X and Y, and $f_x$ and $f_y$ are the fundamental natural frequencies of each of said test beams. In order to obtain a MIC-panel having an aspect ratio determined by the formula, one can for instance choose one of the sizes $a_x$ or $a_y$ as one size while the remaining size is computed according to the above aspect ratio and the test panel can be adjusted.

According to one embodiment, the variation of the optimal aspect ratio according to the formula of the present invention is less than 50% and preferably less than 40%, 30%, 25%, 20%, 15%, 10%, 9%, 8%, 7%, 6%, 5%, 4%, 3%, 2%, 1% of the optimal aspect ratio.

For instance the optimal aspect ratio of the MIC-panel $\left(\dfrac{a_x}{a_y}\right)$ may vary from $\dfrac{a_x}{a_y} - \left(0.25 \times \dfrac{a_x}{a_y}\right)$ to $\dfrac{a_x}{a_y} + \left(0.25 \times \dfrac{a_x}{a_y}\right)$, preferably from $\dfrac{a_x}{a_y} - \left(0.1 \times \dfrac{a_x}{a_y}\right)$ to $\dfrac{a_x}{a_y} + \left(0.1 \times \dfrac{a_x}{a_y}\right)$ and most preferably between

$$\frac{a_x}{a_y} - \left(0.05 \times \frac{a_x}{a_y}\right) \text{ to } \frac{a_x}{a_y} + \left(0.05 \times \frac{a_x}{a_y}\right).$$

The present invention relates to a method for determining the optimal aspect ratio of a test panel, wherein a variation is less than 10% of the optimal aspect ratio.

In a first step of the method of the invention two test beams are cut along the borders of a test panel. Figure 1 shows the two test beams (14 and 15) that can be cut from the test panel (10). A first test beam (14) is cut along the X-axis (12) of the test panel (10) while a second test beam (15) can be cut along the Y-axis (12) of the test panel (10).

Typically, the width of the test beams should be such that the aspect ratio is at least 5 and for instance at least 20 and no higher than 50. The size of both test beams is independent of the size of the test panel.

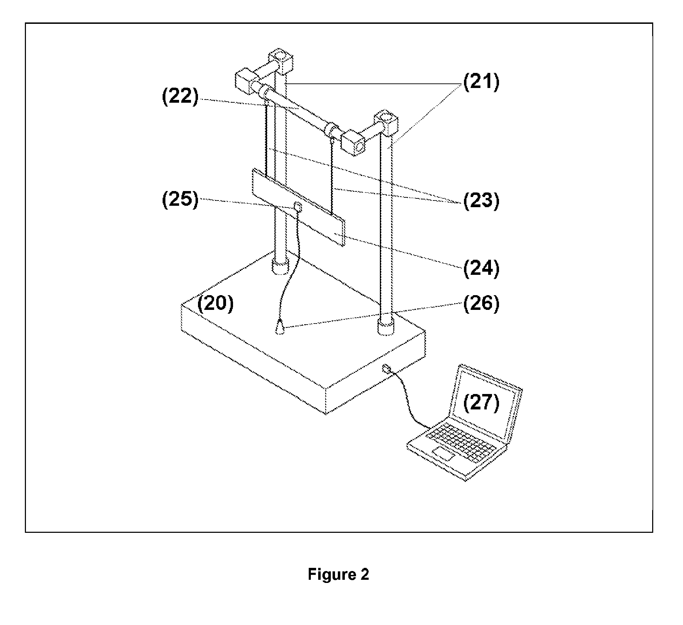

After obtaining test beams from a test panel, the fundamental natural frequency of each of the test beams is measured. For the measurement each test beam is suspended (as indicated in figure 2) alone from a support (21 and 22) by a suspending media (23), such as filaments known in the art and characterized by a low support stiffness made, for example, of nylon, cotton, polyester and/or any similar material known in the art. The suspending media (23) is characterized therein that it has low support stiffness and a minimal effect on motion of the test beam (24) so that the only observations needed for determining the fundamental natural frequencies are obtained from the test beam (24) and the contribution of the suspending media (23) can be disregarded. After suspending the test beam (24), a vibration sensor (25) is provided to the test beam (24). This vibration sensor (25) detects the vibration of the test beam (24). The vibration sensor (25) is a measurement sensor that can measure the vibration and oscillation of a material. Typical sensors that can be used for these purposes are miniature piezoelectric accelerometers with a build in electronic circuit for pre-signal condition purposes (IPC) or laser velocity meters. The typical sensors that can be used such as miniature accelerometers and laser velocity meter are characterized therein that they have a minimal effect on the measured frequencies. After providing the test beam (24) with an impulse, typically using any kind of impulse means such as a hammer, the generated response signal, proportionate to the imparted impulse, is measured by the sensor (25) and communicated to an analyzer (26) which transforms the response signal into a frequency domain. Standard computational methods (27) using Fourier analysis are used for the transformation and the fundamental natural frequencies of the test beam are derived.

Using the fundamental natural frequencies derived from each test beam, an optimal aspect ratio of a test panel can be computed using the formula determining the aspect ratio of the MIC-panel.

Furthermore, from the obtained values of the fundamental natural frequencies of each test beam an initial estimate of $E_x$ and $E_y$, the Young's moduli of Elasticity of both symmetry directions of the material, can be obtained using the Euler-Bernoulli formulas:

$$E_x = 0.9465 \rho \, f_x^2 \frac{L_x^4}{t^2}$$

and

$$E_y = 0.9465 \rho \, f_y^2 \frac{L_y^4}{t^2}$$

In which $E_x$, $L_x$ and $f_x$ are respectively the estimated Young's modulus, the length of the beam and the measured fundamental frequency along the X-axis and $E_y$, $L_y$ and $f_y$ are respectively the estimated Young's modulus, the length of the beam and the measured fundamental frequency along the Y-axis and. The symbol p represents the specific mass of the material and $t$ represents the beam thickness.

The method of the present invention preferably comprises the following steps:

a) cutting of two test beams along the symmetry axes of a test panel,

b) measuring the fundamental natural frequencies of each of the test beams obtained in step a), and,

c) determining the optimal aspect ratio of a MIC-panel using the formula determining the aspect ratio of the MIC-panel. In a preferred embodiment the measurement method of step b) comprises the following steps:

b1) suspending a single test beam alone from a support by a plurality of filaments,

b2) providing the test beam with a vibration sensor for detecting a vibration response,

b3) imparting an impulse to the test beam,

b4) generating a response signal proportionate to the response of the material to the impulse imparted,

b5) communicating the response signal to an analyzer for transforming the response signal into a frequency domain, and,

b6) deriving the fundamental natural frequency of the test beam.

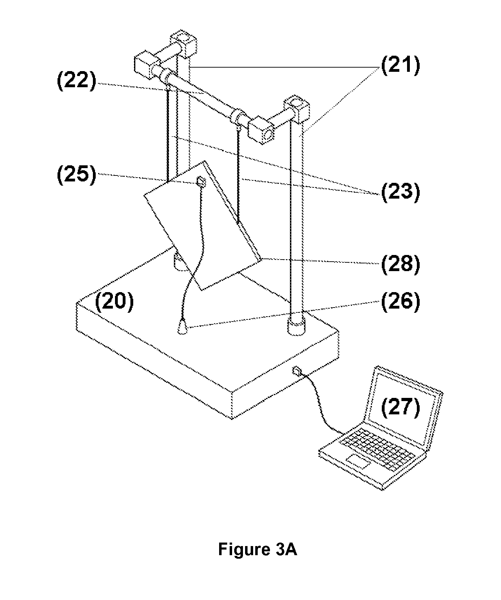

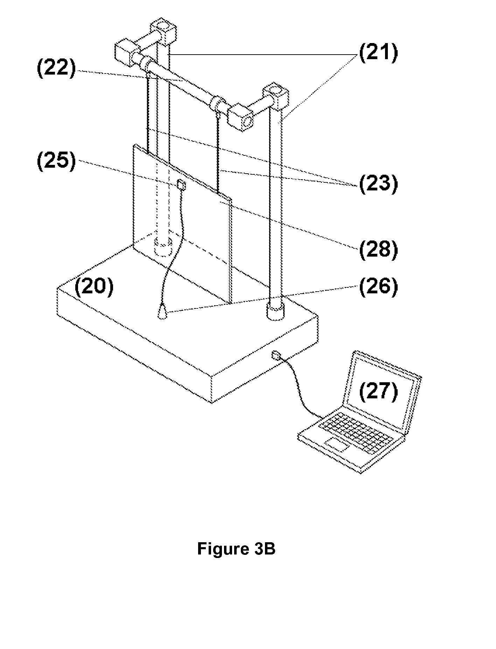

After obtaining all the necessary information from the test beams, the three first natural frequencies of the MIC-panel are measured. The first mode shape of the MIC-panel is known to be a torsion mode, the second is an anticlastic mode and the third is a synclastic mode. The mode shape indices hence need not be experimental measured. The fact that the three first natural frequencies of a MIC panel are associated to known mode shapes makes it possible to generate good starting values for the elastic engineering constants using empirical formulas.
According to the invention an inverse method is used for the identification of the elastic engineering constants of a structural material, by measuring the first three natural frequencies of a MIC-panel. For measuring the natural frequencies of the torsion and synclastic mode shape of a MIC-panel (28), the MIC-panel (28) is suspended from a support by a suspending medium (23). The panel (28) is preferably suspended along its diagonals as indicated in figure 3A. The suspending medium (23) is characterized therein that it has low support stiffness and a minimal effect on the motion of the MIC-panel (28) so that the only observations needed for determining the fundamental natural frequencies are obtained from the MIC-panel (28) and the contribution of the suspending medium (23) can be disregarded. After suspending the MIC-panel (28), a vibration sensor (25) is provided to the MIC-panel (28). The sensor (25) is preferably provided in one of the corners of the MIC-panel (28). Subsequently an impulse is provided to the MIC-panel (28), preferably in one of the corners of the MIC-panel (28) where no vibration sensor is attached. After providing the MIC-panel (28) with an impulse, the generated response signal, proportionate to the imparted impulse is measured by the sensor (25) and communicated to an analyzer (26) which transforms the response signal into a frequency domain. Standard computational methods (27) using Fourier analysis are used and the fundamental natural frequencies of the torsion and synclastic mode shape of the MIC-panel are derived. For measuring the natural frequency anticlastic mode shape of the MIC-panel, the MIC-panel is preferably suspended at both upper corners as indicated in figure 3B. A vibration sensor (25) is provided to the MIC-panel (28), preferably in the centre of one of the rims of the MIC-panel (28). Subsequently an impulse is provided to the MIC-panel (28). After providing the MIC-panel (28) with an impulse, the generated response signal, proportionate to the imparted impulse is measured by the sensor (25) and communicated to an analyzer (26) which transforms the response signal into a frequency domain. Standard computational methods (27) using Fourier analysis are used and the fundamental natural frequency of the anticlastic mode shape of the MIC-panel is derived.

From the data of the fundamental natural frequencies obtained from the test beams and the MIC-panel, values for the elastic engineering constants $E_x$, $E_y$, $G_{xy}$ and $\nu_{xy}$ can be determined. The relation between the fundamental natural frequencies or vibration data obtained from the test beams and the MIC-panel and the elastic material parameters is non linear. This means that the estimation of elastic material properties from measured vibration data has to be done iteratively, based on so-called inverse methods. Generally, the principle of an inverse method for material parameter identification is to compare a measured output from an experiment on a test specimen with the computed output of a numerical model of the same specimen loaded with the same input values. The difference between the measured and computed output is called "the residual". The residual can be incorporated in a user defined cost function that describes the goodness of fit of the numerical model with the test specimen. A simple example of a cost function is the summation of the squared differences between the corresponding output components. The - a priori unknown - material properties are the parameters in the numerical model. These material properties are preferably iteratively tuned in such a way that the computed output matches the measured output. The parameter modifications are computed by minimisation of the cost function. The final result of the output matching procedure is an estimate of the parameters values and eventually an estimate of their error bounds.

The elastic behaviour of isotropic and/or orthotropic materials in a plane state of stress can be characterised by 4 independent elastic engineering constants. The constants appear in the flexibility matrix that describes the relation between the strain column and stress column:

$$
\begin{Bmatrix} \varepsilon_x \\ \varepsilon_y \\ \gamma_{xy} \end{Bmatrix} = \begin{bmatrix} \dfrac{1}{E_x} & -\dfrac{\nu_{yx}}{E_y} & 0 \\ -\dfrac{\nu_{xy}}{E_x} & \dfrac{1}{E_y} & 0 \\ 0 & 0 & \dfrac{1}{G_{xy}} \end{bmatrix} \begin{Bmatrix} \sigma_x \\ \sigma_y \\ \tau_{xy} \end{Bmatrix}
$$

In which $\varepsilon_x$ is the normal strain component in the X-direction, $\varepsilon_y$ is the normal strain component in the Y-direction, $\gamma_{xy}$ is the shear strain component in the XY-plane, $\sigma_x$ is the normal stress component in the X-direction, $\sigma_y$ is the normal stress component in the Y-direction $\tau_{xy}$ is the shear stress component in the XY-plane, $\nu_{xy}$ is the major Poisson's ratio in the XY-plane, $\nu_{yx}$ is the minor Poisson's ratio in the XY-plane, $E_x$ is the Young's modulus in the X-direction, $E_y$ is the Young's modulus in the Y-direction and $G_{xy}$ is the shear modulus in the XY-plane.

Five elastic engineering constants, $E_x$, $E_y$, $\nu_{xy}$, $\nu_{yx}$ and $G_{xy}$, are required in the flexibility matrix but due to the symmetry of the flexibility matrix, the following relation holds:

$$
\frac{\nu_{xy}}{E_x} = \frac{\nu_{yx}}{E_y}
$$

Due to the symmetry of the flexibility matrix only four independent elastic engineering constants are required to characterize completely the in plane behaviour of a material. The first natural frequency of the MIC-panel is associated to the torsion mode shape. An estimate of the in-plane shear modulus $G_{xy}$ can be computed with the empirical formula:

$$
G_{xy} = 0.9513\,\rho\, f_T^2\, \frac{a_x^2\, a_y^2}{t^2}
$$

In which $a_x$ and $a_y$ are the sizes of the MIC-panel along the symmetry axes X and Y and $f_T$ is the natural frequency of the torsion mode shape. The symbol p represents the specific mass of the material and $t$ the thickness of the panel.

Starting value for the value of major Poisson's ratio can be found with the empirical formula:

$$
\nu_{xy} = c\, \frac{f_S^2 - f_A^2}{f_S^2 + f_A^2}
$$

In this formula $f_S$ and $f_A$ are respectively the natural frequencies associated to the synclastic and the anticlastic mode shapes and c represents a constant. At the end of the pre-processing procedure, two natural frequencies of the test beams and three natural frequencies of the MIC-panel are known and start values for the four elastic engineering constant are available. Due to the direct relationship between the elastic engineering constants and the measured natural frequencies the observability of the elastic engineering constants and the controllability of the natural frequencies are guaranteed.

The next step is the actual identification of the four elastic engineering constants using an inverse method. The difference between a state of the art inverse method and the inverse method according to the invention is that in the latter also the natural frequencies of the two test beams are taken into account. This extra information allows reducing the necessary number of natural frequencies taken from the test panel to the three lowest frequencies. These three frequencies can be accurately computed with a numerical model. In contrast, the higher order natural frequencies, which are necessary in a state of the art method, are computed with a considerable higher error.

The accuracy of the obtained elastic engineering constants can be expressed using the next formula:

$$
Error\,bound\,on\begin{Bmatrix} E_x \\ E_y \\ \nu_{xy} \\ G_{xy} \end{Bmatrix} = \begin{bmatrix} S_{Beam\,X} & 0 & S_{11}^{Plate} & S_{12}^{Plate} & S_{13}^{Plate} \\ 0 & S_{Beam\,Y} & S_{21}^{Plate} & S_{22}^{Plate} & S_{23}^{Plate} \\ 0 & 0 & S_{31}^{Plate} & S_{32}^{Plate} & S_{33}^{Plate} \\ 0 & 0 & S_{41}^{Plate} & S_{42}^{Plate} & S_{43}^{Plate} \end{bmatrix}^{+} \begin{Bmatrix} \left| error\,f_{BeamX} \right| \\ \left| error\,f_{BeamY} \right| \\ \left| error\,f_{T}^{Plate} \right| \\ \left| error\,f_{A}^{Plate} \right| \\ \left| error\,f_{S}^{Plate} \right| \end{Bmatrix}
$$

In this formula, the symbol + relates to the pseudo-inverse of the matrix. The components of the matrix are the sensitivities of the five frequencies for the elastic engineering constants. The symbols $S_{11}^{Plate}, S_{21}^{Plate}, S_{31}^{Plate}, S_{41}^{Plate}$ relate to the sensitivity of the torsional frequency for respectively $E_x, E_y, \nu_{xy}, G_{xy}$ of the plate. The symbols $S_{12}^{Plate}, S_{22}^{Plate}, S_{32}^{Plate}, S_{42}^{Plate}$ relate to the sensitivity of the anticlastic frequency for respectively $E_x, E_y, \nu_{xy}, G_{xy}$ of the plate. The symbols $S_{13}^{Plate}, S_{23}^{Plate}, S_{33}^{Plate}, S_{43}^{Plate}$ relate to the sensitivity of the synclastic frequency for respectively $E_x$, $E_y, \nu_{xy}, G_{xy}$ of the plate. The symbol $S_{BeamX}$ relates to the sensitivity of the test beam cut along the X-axis and $S_{BeamY}$ relates to the sensitivity of the test beam cut along the Y-axis. The formula shows that the error bound will be low for low errors on the measured natural frequencies and small values for the pseudo inverse sensitivity matrix. This requires a good numerical condition of the sensitivity matrix. It can be shown that the error bound for the procedure according to the invention is minimal because the sensitivity of Poisson's ratio of an MIC-panel is maximal. It is not possible to make a panel with a higher sensitivity for Poisson's ratio than the MIC-panel according to the invention. This, together with the fact that the 3 lowest natural frequencies can be computed accurately with the numerical model, makes that the error bounds or uncertainty on the obtained elastic engineering constants are lower than with any existing state of the art method.

The present invention therefore relates to an inverse method for the identification of elastic engineering constants of a structural material, wherein the first three natural frequencies of a MIC-panel, having an aspect ratio determined according to a method of the present invention, are measured.

In another embodiment the measurement of the first three natural frequencies of a MIC-panel in the inverse method comprises the following steps:

a) suspending a MIC-panel, having an aspect ratio determined according to a method of the present invention, diagonally,

b) providing a vibration sensor to the MIC-panel in one of the corners of the MIC-panel,

c) imparting an impulse in another corner of the MIC-panel,

d) measuring the natural frequencies of the torsion and synclastic mode shapes,

e) suspending the MIC-panel by the upper corners,

f) providing a vibration sensor to the MIC-panel in the centre of one of the rims of said MIC-panel,

g) imparting an impulse in the centre of the MIC-panel, and,

h) measuring the natural frequency of the anticlastic mode shape.

In a more preferred embodiment the inverse method of the present invention determines the values for the elastic engineering constants $E_x$, $E_y$, $G_{xy}$ and $\nu_{xy}$ using the fundamental natural frequencies obtained from the test beams and the MIC-panel.

The structural material used in the present invention can be any kind of material known in the art. The structural material can either be an isotropic material, such as, but not limited to, steel, aluminium, polymers or glass or an anisotropic material, such as, but not limited to polymer resins reinforced with high strength, high stiffness fibres, wood, ceramics or metals. Preferably the structural material is an anisotropic material and more preferably an orthotropic material. The test panel from the structural material preferably has a rectangular shape. In a preferred embodiment of the present invention the structural material is either an isotropic or an anisotropic material, preferably an anisotropic material and for instance an orthotropic material.

In a preferred embodiment of the present invention a test panel from the structural material has a rectangular shape.

The present invention further relates to a test panel (10) for determining the elastic engineering constants of a structural material according to a method of the present invention, wherein a first test beam (14) is cut from said test panel (10) along the X symmetry axis (12) and a second test beam (15) is cut from said test panel (10) along the Y symmetry axis (13).

In another embodiment the present invention relates to a MIC-panel, having as the three first natural frequencies torsion, synclastic and anticlastic mode shapes, for measuring the elastic properties of the structural material, wherein the aspect ratio of said MIC-panel is determined according to a method of the present invention.

The present invention further relates to the use of a method of the present invention, for the determination of the optimal aspect ratio of a test panel.

In another embodiment the present invention relates to the use of an inverse method of the present invention, for the determination of the elastic engineering constants of a structural material.

In another embodiment the present invention refers to a computer program product which can be loaded into a programmable apparatus, **characterized in that** it contains sequences of instructions or portions of software code for receiving and analysing data from the vibration sensor and implementing the steps of the method of the present invention.

The modal shape indices and corresponding frequencies are utilized as inputs to a computing program. Though such inputs may be made manually, computerized data acquisition techniques may also be used. In such techniques, the vibration sensors provide input signals to one or more analog-to-digital convertors, which, in turn, provide digital data to the computer.

In yet another embodiment the present invention refers to an apparatus for the non-destructive determination of the elastic properties of a structural material, wherein said apparatus comprises a suspension frame from which a fine suspending medium extends, said fine suspending medium being suitable for carrying the material, an impulse means for imparting the material, a vibration sensor, suitable to be connected to the material, that enables the detection of the response of the material as a result from the reaction with said impulse means, a signal conditioning unit capable of amplifying the signal provided by said vibration sensor and removing the measurement noise and a computer means adopted to implement the steps of the method of the present invention, wherein said computer means is provided with a computer program according to the present invention.

The novelty of the present invention is that it provides a method for the determination of the optimal aspect ratio of MIC-panel. The inventors have surprisingly found that by obtaining vibrational information from two test beams requiring only a vibration sensor, a signal conditioning unit and a computing means like a personal computer the optimal aspect ratio of a MIC-panel can be determined. The same simple and cheap equipment can be used for the measurement of the 3 natural frequencies of said MIC-panel. The identification procedure of the elastic engineering constants uses vibration response data from the MIC-panel and the two test beams. Due to the maximal information contents in the frequencies of the test beams and the MIC-panel, the obtained elastic engineering constants with the inverse method have the lowest possible uncertainty bounds. The method of the present invention is therefore economically beneficial, it requires simple measurement equipment and the experiment time is also drastically reduced. Further, since only a small set of three natural frequencies must be measured, the method is easy and fast from an experimental point of view, and provides more accurate results with a numerical model and therefore contributes to the reduction of the uncertainty bound on the obtained elastic engineering constants. The method further provides good initial estimates for the elastic engineering constants using the measured natural frequencies of the test beams and MIC-panel with simple empirical formulas. By resolving the difficulties of the state of the art methods inverse methods for the identification of elastic engineering constants from vibration data of panel can be used by experimentalists in industry and research laboratories.

The method of quickly extracting the four independent elastic engineering constants of orthotropic materials from plate vibration test data has been successfully applied to an isotropic, a nearly isotropic, a moderately orthotropic, and a highly orthotropic material. The method has been extended in theory to the case of initially-assumed isotropy, and the validity of this extension is verified by two cases. The basic method has also been used to investigate the effects of support conditions on the values of the predicted elastic engineering constants.

The present method and the foregoing discussion apply to thin plates for which through-the-thickness shear and rotary inertia may be neglected. However, thick composite plates are often required for various applications. More refined theories are therefore needed. From a detailed assessment of such higher-order theories, it appears that the piecewise-linear individual-layer theory may be the simplest and most effective way to extend the present work to thick plates.

Additionally, the disclosed technique may be used to evaluate composite parts having arbitrary geometry, including full scale components.

Furthermore, the disclosed techniques may be integrated into the manufacturing process in order to control, as well as monitor, the elastic properties of the components. This is accomplished by generating and communicating feedback signals representative of the elastic properties to the processing equipment. In this way, various process control parameters, such as pressure, temperature, and heating and cooling rates may be adjusted to maintain the elastic properties within the desired limits.

Thus, there has been disclosed a method for extracting the elastic engineering constants of orthotropic materials from experimental plate vibration data. The method is adaptable to a wide variety of formulations of the elastic-dynamic behaviour of laminated plates.

**Examples**

*Example 1:*

The present invention relates to a method for determining the optimal aspect ratio of a test panel from a structural material using the following exemplified procedure. A homogeneous high quality test panel made of uni-directionally carbon reinforced epoxy has been characterized using the method of the present invention. The panel has a uniform thickness of 0.003 m and a specific mass of 1600 kg/m$^3$. The orthotropic symmetry axes are along and perpendicular to the fibre direction. Two test beams, one along the fibre direction and one perpendicular to the fibre direction are cut from the test panel. The first beam has a length ($L_x$) of 0.2 m and a width of 0.02 m. The second beam has a length ($L_y$) of 0.18 m and a width of 0.02 m. Separately, each of the test beams was suspended from a support by two filaments and a vibration sensor was attached to the test beam. The test beam was provided with an impulse and the vibration response was measured. The results showed that the first test beam has a fundamental natural frequency ($f_x$) of 639.3 Hz and the second test beam has a fundamental natural frequency ($f_y$) of 291.6 Hz. Using the formula of the present invention the optimal aspect ratio of the test panel could be determined.

$$\frac{a_x}{a_y} = \frac{L_x}{L_y}\sqrt{\frac{f_x}{f_y}} = \frac{0.2}{0.18}\sqrt{\frac{639.3}{291.6}} = 1.645$$

This aspect ratio therefore enables to provide a MIC panel machined out of the original test panel. Therefore a panel with a length of 0.3 m and a width of 0.182 m can be regarded as an optimal test panel.

*Example 2:*

The present invention relates to an inverse method for the identification of elastic engineering constants of a structural material using the following exemplified procedure. A MIC panel is provided as shown in example 1. Using the method of the present invention the 3 first natural frequencies of the MIC panel are measured. The MIC panel was suspended diagonally (as shown in figure 3A) from the support by two filaments and a vibration sensor was attached in the upper corner of the MIC panel. The MIC panel was provided with an impulse and the vibration response was measured. Next, the MIC panel was suspended by the upper corners (as shown in figure 3B) from the support by two filaments and a vibration sensor was attached in the centre of the MIC panel. The MIC panel was provided with an impulse and the vibration response was measured.

The measured natural frequencies are respectively 137.9 Hz, 277.7 Hz and 292.3 Hz. Because the measured panel is a MIC panel, it is known that the first frequency is associated with a torsional mode shape with mode shape indices (1, 1), the second with an anticlastic mode shape with mode shape indices (2, 2) and the third with a synclastic mode shape with mode shape indices (0, 0). With the measured natural frequency values of the MIC panel and the natural frequency values of the test beams measured in example 1, starting values for the 4 engineering constants $E_x$, $E_y$, $G_{xy}$ and $\nu_{xy}$ are generated using empirical formulas. Subsequently these material parameters are iteratively updated till the natural frequencies computed with the numerical model agree with the measured values. The obtained the natural frequency values are:

$E_x$ = 1.1 10$^{11}$ N/m$^2$
$E_y$ = 1.5 10$^{10}$ N/m$^2$
$v_{xy}$ = 0.20
$G_{xy}$ = 9.0 10$^9$ N/m$^2$

These results match with the real engineering constants of the test panel provided by the manufacturer

*Example 3:*

The present invention relates to a method for determination of elastic engineering constants of a structural material. The present example compares the method of the present invention with a method of the art
wherein the elastic engineering constants of a structural material are determined on a test panel having an estimated aspect ratio. Instead of a MIC panel, a random square panel with dimensions 0.3 m x 0.3 m is machined out of the original panel. The 5 first natural frequencies of this square plate are measured. Also the associated mode shapes indices are recorded using a modal analysis technique.
The result are shown in table 1.

Table 1

| Natural frequency | Measured frequency (Hz) | Mode shape indice |
|---|---|---|
| 1 | 83.6 | (1,1) |
| 2 | 106.0 | (0,2) |
| 3 | 204.0 | (1,2) |
| 4 | 281.7 | (2,3) |
| 5 | 320.0 | (2,0) |

Starting from estimated values for the engineering constants, the frequencies of the square panel are updated till they match the measured values as close as possible. The same starting values are used for a procedure with the MIC panel and the two test beams as described in examples 1 and 2.
Table 2 shows the comparison of the two measurement methods.

Table 2

| Engineering constant | Starting values | Random square panel values | Error | MIC panel values | Error |
|---|---|---|---|---|---|
| $E_x$ [N/m$^2$] | 1.5 10$^{11}$ | 1.38 10$^{11}$ | 11 % | 1.10 10$^{11}$ | 0 % |
| $E_y$ [N/m$^2$] | 1.3 10$^{10}$ | 1.48 10$^{10}$ | 1.3 % | 1.5 10$^{10}$ | 0 % |
| $v_{xy}$ [-] | 0.25 | 0.33 | 65 % | 0.20 | 0 % |
| $G_{xy}$ [N/m$^2$] | 9.5 10$^9$ | 9.30 10$^9$ | 3.3 % | 9.01 10$^9$ | 0 % |

With the random square test panel, poor results are obtained because none of the measured natural frequencies is sensitive for variations of Poisson's ratio. The method required the measurement of 5 frequencies and the determination of the mode shape indices with modal analysis equipment. The error on Poisson's ratio is therefore high and as a consequence, the values of the other engineering constants are also not accurate. Using a MIC panel enables the determination of the engineering values without error.

*Example 4:*

The method of the present invention can be used to measure the engineering constants of various types of materials. Engineering constants are measured for an isotropic glass panel, an orthotropic wooden particle panel, an orthotropic carbon reinforced epoxy panel (see examples 1 and 2) and an orthotropic glass/polypropylene thermoplastic composite material panel ("Twintex").

| Parameters | | Glass panel (*) | Wooden particles panel | Carbon reinforced epoxy panel | Glass/ polypropylene thermoplastic composite material panel ("Twintex") |
|---|---|---|---|---|---|
| Material type | | Isotropic | Orthotropic | Orthotropic | Orthotropic |
| Test beam X | $L_x$ [m] | - | 0.402 | 0.2 | 0.3 |
| | $f_x$ [Hz] | - | 378.2 | 639.3 | 146.1 |
| Test beam Y | $L_y$ [m] | - | 0.402 | 0.18 | 0.16 |
| | $F_y$ [Hz] | - | 335.2 | 291.6 | 219.9 |
| MIC panel dimensions | Length [m] | 0.25 | 0.401 | 0.3 | 0.239 |
| | Width [m] | 0.25 | 0.378 | 0.182 | 0.156 |
| | Thickness [m] | 0.0039 | 0.024 | 0.003 | 0.003 |
| Natural frequencies | First [Hz] | 219.5 | 236.1 | 137.9 | 95.4 |
| | Second [Hz] | 318.9 | 335.0 | 277.7 | 217.5 |
| | Third [Hz] | 375.1 | 415.3 | 292.3 | 242.1 |
| Engineering constants | $E_x$ [N/m$^2$] | $7.43\ 10^{10}$ | $3.9\ 10^9$ | $1.10\ 10^{11}$ | $2.72\ 10^{10}$ |
| | $E_y$ [N/m$^2$] | $7.43\ 10^{10}$ | $3.07\ 10^9$ | $1.5\ 10^{10}$ | $5.17\ 10^9$ |
| | $v_{xy}$ [-] | 0.242 | 0.249 | 0.20 | 0.314 |
| | $G_{xy}$ [N/m$^2$] | $3.0\ 10^{10}$ | $1.28\ 10^9$ | $9.01\ 10^9$ | $1.92\ 10^9$ |
| (*) Due to the isotropic nature of the glass panel, the MIC panel has a square shape and no test beams should be measured. | | | | | |

**Claims**

1. A method for determining the optimal aspect ratio of a test panel from a structural material, wherein said optimal aspect ratio is determined using the formula:

$$\frac{a_x}{a_y} = \frac{L_x}{L_y}\sqrt{\frac{f_x}{f_y}}$$

where $a_x$ and $a_y$ are the dimensions of the MIC-panel along the two symmetry axes X and Y, $L_x$ and $L_y$ are the longitudinal lengths of the test beams cut from a test panel along both symmetry axes X and Y, and $f_x$ and $f_y$ are respectively the fundamental natural frequencies of said test beams.

2. The method according to claim 1, wherein the variation of the optimal aspect ratio is less than 10%.

3. The method according to claims 1 or 2, wherein the method comprises the following steps:

   a) cutting of two test beams along the symmetry axes of a test panel,
   b) measuring the fundamental natural frequencies of each of the test beams obtained in step a), and,
   c) determining the optimal aspect ratio of a MIC-panel using the formula of claim 1.

4. The method according to claim 3, wherein the measurement method of step b) comprises the following steps:

b1) suspending a single test beam alone from a support by a plurality of filaments,

b2) providing the test beam with a vibration sensor for detecting a vibration response,

b3) imparting an impulse to the test beam,

b4) generating a response signal proportionate to the response of the material to the impulse imparted,

b5) communicating the response signal to an analyzer for transforming the response signal into a frequency domain, and,

b6) deriving the fundamental natural frequency of the test beam.

5. An inverse method for the identification of elastic engineering constants of a structural material, wherein the first three natural frequencies of a MIC-panel, having an aspect ratio determined according to a method of any of claims 1 to 4, are measured.

6. The inverse method according to claim 5, wherein the measurement method comprises the following steps:

a) suspending said MIC-panel, having an aspect ratio determined according to a method of any of claims 1 to 4, diagonally,

b) providing a vibration sensor to said MIC-panel in one of the corners of said MIC-panel,

c) imparting an impulse in another corner of said MIC-panel,

d) measuring the natural frequencies of the torsion and synclastic mode shape,

e) suspending said MIC-panel by the upper corners,

f) providing a vibration sensor to said MIC-panel in the centre of one of the sides of said MIC-panel,

g) imparting an impulse in the centre of said MIC-panel, and,

h) measuring the natural frequency of the anticlastic mode shape.

7. The inverse method according to claim 5 or 6, wherein the values for the elastic engineering constants $E_1$, $E_2$, $G_{12}$ and $\nu_{12}$ are determined using the fundamental natural frequencies obtained from said test beams and said MIC-panel.

8. The method and/or inverse method according to any of claims 1 to 7, wherein the structural material of said test panel is an anisotropic material.

9. The method and/or inverse method according to any of claims 1 to 8, wherein said test panel has a rectangular shape.

10. The method and/or inverse method according to any of claims 1 to 9, wherein the aspect ratio of each said test beams is at least 5, preferably 20 and no higher than 50.

11. A MIC-panel for measuring the elastic properties of the structural material, wherein the aspect ratio of said MIC-panel is determined according to a method of any of claims 1 to 4.

12. Use of a method according to any of claims 1 to 4, for the determination of the optimal aspect ratio of a test panel.

13. Use of an inverse method according to any of claims 5 to 7, for the determination of the elastic engineering constants of a structural material.

14. A computer program product which can be loaded into a programmable apparatus, **characterized in that** it contains sequences of instructions or portions of software code for receiving and analysing data from the vibration sensor and implementing the steps of the method according to one of claims 1 to 10.

15. An apparatus for the non-destructive determination of the elastic properties of a structural material, wherein said apparatus comprises a suspension frame from which a fine suspending medium extends, said fine suspending medium being suitable for carrying the material, an impulse means for imparting the material, a vibration sensor, suitable to be connected to the material, that enables the detection of the response of the material as a result from the reaction with said impulse means, a signal conditioning unit capable of amplifying the signal provided by said vibration sensor and a computer means adopted to implement the steps of the method according to one of claims 1 to 10, wherein said computer means is provided with a computer program of claim 14.

Figure 1

**Figure 2**

**Figure 3A**

(22)

(21)

(25)

(23)

(28)

(26)

(20)

(27)

**Figure 3B**

Europäisches
Patentamt

European
Patent Office

Office européen
des brevets

**EUROPEAN SEARCH REPORT**

**Application Number**

EP 08 15 6386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE VISSCHER ET AL.: "IDENTIFICATION OF THE DAMPING PROPERTIES OF ORHOTROPIC COMPOSITE MATERIALS USING A MIXED NUMERICAL EXPERIMENTAL METHOD" APPLIED COMPOSITE MATERIALS, vol. 4, 1997, pages 13-33, XP002507948 NL * paragraphs [0003], [05.3]; figures 1,2,4,5 *<br>----- | 1-15 | INV. G01N3/30 G01N29/04 G01N29/12<br><br>ADD. G01N3/02 |
| X | DE BAERE ET AL: "Comparison of different identification techniques for measurement of quasi-zero Poisson's ratio of fabric-reinforced laminates" COMPOSITES PART A: APPLIED SCIENCE AND MANUFACTURING, ELSEVIER SCIENCE PUBLISHERS B.V., AMSTERDAM, NL, vol. 38, no. 9, 24 August 2007 (2007-08-24), pages 2047-2054, XP022211681 ISSN: 1359-835X * paragraphs [02.1] - [02.2] *<br>----- | 1 | |
| A | US 5 533 399 A (GIBSON RONALD F [US] ET AL) 9 July 1996 (1996-07-09) * the whole document *<br>----- | 1 | TECHNICAL FIELDS SEARCHED (IPC)<br><br>G01N |

The present search report has been drawn up for all claims

| Place of search | Date of completion of the search | Examiner |
|---|---|---|
| The Hague | 12 December 2008 | Hocquet, Alain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 15 6386

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2008

| Patent document cited in search report | Publication date | Patent family member(s) | Publication date |
|---|---|---|---|
| US 5533399 A | 09-07-1996 | NONE | |

EPO FORM P0459

For more details about this annex : see Official Journal of the European Patent Office, No. 12/82